# EUROPÄISCHE PATENTANMELDUNG

(11) **EP 1 103 209 A1**
(43) Veröffentlichungstag der Anmeldung: **30.05.2001**
(21) Anmeldenummer: 00124679.2
(22) Anmeldetag: 11.11.2000
(51) Int. Cl.: A47J 27/212, A47J 27/21

(54) **Wasserkocher mit Temperaturindikator**

(30) Priorität: 26.11.1999 DE 19957103
(71) Anmelder: Braun GmbH, 61476 Kronberg (DE)
(72) Erfinder: Loth-Krausser, Hartmut, 64589 Stockstadt (DE)

(57) **Zusammenfassung**

Die Erfindung betrifft einen Wasserkocher mit zumindest einem Wasserbehälter (1), einer Heizeinrichtung (9) zum Erhitzen der im Wasserbehälter (1) aufgenommenen Flüssigkeit (18) und einer mit einem Temperatursensor (6) verbundenen Steuereinrichtung (4), die zum automatischen Abschalten der Heizeinrichtung (9) beim Erreichen des Siedepunkts. Dabei weist der Wasserkocher einen von der Steuereinrichtung (4) angesteuerten Temperaturindikator (10) zum Signalisieren des Erreichens zumindest einer vorbestimmten diskreten Temperatur unterhalb des Siedepunkts auf. Hierdurch wird ein Wasserkocher zur Verfügung gestellt, der das Abtöten von in der Flüssigkeit enthaltenen Keimen sowie das zumindest teilweise Verdampfen von darin enthaltenem Chlor sicherstellt und der dem Benutzer das Erreichen einer gewünschten Temperatur unterhalb des Siedepunkts signalisiert.

## Beschreibung

Die Erfindung betrifft einen Wasserkocher gemäß dem Oberbegriff des Patentanspruchs 1.

Im allgemeinen wird die mit einem Wasserkocher erhitzte Flüssigkeit, insbesondere Wasser, vor allem für die Zubereitung von Speisen und Getränken benutzt. So wird beispielsweise beim Zubereiten von grünem Tee Wasser zunächst zum Kochen gebracht, damit vorhandene Keime abgetötet werden und möglicherweise enthaltenes Chlor wenigstens teilweise entweichen kann. Danach wird das Wasser auf eine Temperatur abgekühlt, die in Abhängigkeit von der Teesorte zwischen 60° C und 90° C liegt. Diese Temperatur ist notwendig, damit bestimmte Bitterstoffe des Tees nicht gelöst werden und der Tee sein Aroma optimal entfalten kann. Ähnlich verhält es sich bei der Zubereitung von Babynahrung, wo dem Abtöten von Keimen und dem Entfernen von Chlor ganz besondere Bedeutung zukommt. Die Babynahrung soll dabei möglichst eine Temperatur nahe der Körpertemperatur haben.

Bei bisherigen Wasserkochern wird das Wasser zum Abtöten von Keimen zunächst zum Kochen gebracht, danach erfolgt eine Abkühlphase, nach deren Ablauf angenommen wird, daß die Temperatur in dem gewünschten Bereich liegt. Die Dauer für die Abkühlphase wird dabei empirisch oder durch Berechnung ermittelt oder den Empfehlungen der Literatur entnommen. Der Ablauf der Abkühlphase kann beispielsweise durch einen elektronischen Kurzzeitmesser akustisch angezeigt werden, so daß die abgelaufene Abkühlzeit nicht permanent beobachtet werden muß. Dieses Verfahren hat den Nachteil, daß die Temperatur nur sehr grob eingestellt werden kann. Es ist ein zusätzliches Gerät, eine Uhr oder ein Kurzzeitmesser erforderlich. Bei Verwendung einer Uhr muß die abgelaufene Abkühlzeit beobachtet werden.

Alternativ kann die Temperatur während der Abkühlphase mit einem geeigneten Thermometer gemessen werden. Sobald das Wasser die gewünschte Temperatur erreicht hat, wird beispielsweise der Tee aufgegossen. Nachteil bei diesem Verfahren ist es, daß ein zusätzliches Thermometer mit geeignetem Meßbereich besorgt werden muß.

Um diesen Nachteil zu vermeiden beschreibt die GB 2311716 A einen Wasserkocher, bei dem im oberen Bereich des Haltegriffs eine Anzeige für den Füllstand und einen gewünschten Temperaturbereich zwischen 100° C und 86° C angeordnet ist. Dabei wird als Temperaturanzeigevorrichtung ein Streifen aus wärmeempfindlichem Material verwendet. Nach dem Erreichen des Siedepunkts schaltet die Heizplatte automatisch ab. Im Temperaturbereich zwischen 100° C und 86° C verfärbt sich die Temperaturanzeigevorrichtung von grün nach schwarz. Unterhalb 86° C weist der wärmeempfindliche Streifen wieder grüne Farbe auf. Nachteil dieses Wasserkochers ist es allerdings, daß durch die Temperaturanzeigevorrichtung lediglich ein bestimmter Temperaturbereich, nämlich der Bereich zwischen 100° C und 86° C angezeigt wird. Der Benutzer muß somit die Temperaturanzeige während der Abkühlphase ständig im Auge behalten. Dies hält von anderen Tätigkeiten ab und ist für den Benutzer unangenehm. Eine manuelle Vorwahl einer gewünschten diskreten Temperatur ist dabei nicht möglich.

Zwar offenbart die GB 2327180 A einen Wasserkocher, bei dem verschiedene Temperaturen über einen Schalter diskret vorgewählt werden können, dabei wird jedoch lediglich angestrebt, daß bei Erreichen der vorgewählten Temperatur, zum Beispiel 40° C, ein entsprechendes akustisches Signal ertönt und der Wasserkocher automatisch abgeschaltet wird. Nachteil hierbei ist es, daß insbesondere bei niedrigeren Temperaturen, wie sie beispielsweise bei der Zubereitung von Babynahrung verwendet werden, kein sicheres Abtöten von im Wasser verhandenen Keimen erfolgt und auch möglicherweise im Wasser vorhandenes Chlor nicht entweichen kann.

Der vorliegenden Erfindung liegt die Aufgabe zugrunde, die beim Stand der Technik vorhandenen Nachteile zu vermeiden. Insbesondere soll ein Wasserkocher zur Verfügung gestellt werden, der das Abtöten von in der Flüssigkeit enthaltenen Keimen sowie das zumindest teilweise Verdampfen von darin enthaltenem Chlor sicherstellt und der dem Benutzer das Erreichen einer gewünschten Temperatur unterhalb des Siedepunkts signalisiert.

Diese Aufgabe wird durch eine Vorrichtung mit den Merkmalen des Patentanspruchs 1 gelöst. Vorteilhafte Ausgestaltungen der Erfindung werden in den Unteransprüchen beschrieben.

Der erfindungsgemäße Wasserkocher hat den Vorteil, daß damit Wasser mit der für die ausgewählte Sorte eines grünen Tees erforderlichen Temperatur ausreichend genau, ohne Beobachtung der Abkühlphase und ohne zusätzliche Geräte, zubereitet werden kann. Ferner ist die zielgenaue und sichere Zubereitung von Babynahrung unter zur Verfügungstellung von keimfreiem und weitestgehend von Chlor befreitem Wasser möglich. Dabei ist es wesentlich, daß zunächst die Flüssigkeit zum Sieden oder auch Blasensieden bzw. Kochen gebracht wird, also auf Siedetemperatur erhitzt und dann auf eine vorbestimmte diskrete Temperatur (im folgenden Zieltemperatur) abgekühlt wird. Auch ist es möglich zwei Zieltemperaturen vorzusehen, z.B. 70° C und 35° C, um beispielsweise zunächst Tee aufzugießen und danach Babynahrung zuzubereiten. Auch kann über die Zieltemperatur ein erneutes Aufheizen des gesiedeten Wassers geregelt werden, d.h. ein Aufwärmen auf die Zieltemperatur, nachdem die Temperatur deutlich unter die Zieltemperatur abgefallen ist. Um die Ansteuerung des Temperaturindikators während des Erhitzens zu vermeiden, muß durch die Steuereinrichtung berücksichtigt werden, daß die Siedetemperatur bereits einmal erreicht worden ist, oder aber ein negativer Temperaturgradient vorliegt.

Eine vorteilhafte Weiterbildung der Erfindung weist die Merkmale des Anspruch 3 auf, wobei hierdurch individuelle Temperaturen für Tee, Babynahrung, etc. eingestellt werden können. Vorteilhafte Ausgestaltungen einer derartigen Eingabeeinrichtung sind durch die Merkmale der Ansprüche 4 und 5 dargestellt. Dabei stellt beispielsweise die Ausgestaltung als zwei- oder dreistufiger Schalter eine kostengünstige Alternative zu einem stufenlosen Schiebe- oder Drehregler dar.

Vorteilhafte Ausgestaltungen eines erfindungsgemäßen Temperaturindikators sind in den Ansprüchen 6 und 7 beschrieben, wobei diese beiden Ausgestaltungen auch in Kombination Verwendung finden können. Hierdurch wird sichergestellt, daß auch Benutzer mit Hör- oder Sehschwäche einen erfindungsgemäßen Wasserkocher in vorteilhafter Weise nutzen können.

Das Vorsehen einer zusätzlichen Temperaturanzeige gemäß den Merkmalen des Anspruch 8 ermöglicht dem Benutzer, falls gewünscht, den Abkühlungsverlauf zu überwachen. Dabei kann beispielsweise ein Widerstandsthermometer mit analoger oder digitaler Anzeige Verwendung finden. Eine besonders kostengünstige Ausgestaltung einer derartigen Temperaturanzeige wird dabei in Abspruch 9 beschrieben.

Schließlich sieht eine vorteilhafte Ausführungsform mit den Merkmalen des Anspruch 10 Zieltemperaturen vor, die entweder ausgewählt als werksseitige Voreinstellung, beispielsweise für einen Wasserkocher zur Teezubereitung, oder aber als diskrete Werte eines mehrstufigen Eingabeschalters dienen können. Die genannten Temperaturstufen von 90° C bis 60° C sind dabei für verschiedene Teesorten geeignet, wogegen sich eine Temperatur von 40° C für die Zubereitung von Babynahrung eignet.

Schließlich sieht eine vorteilhafte Weiterbildung der vorliegenden Erfindung eine Ausgestaltung mit den Merkmalen gemäß Anspruch 11 vor, wodurch der Wasserkocher flexibel handhabbar ist.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1:: Eine schematische Darstellung einer vorteilhaften Ausführungsform der vorliegenden Erfindung;
- Fig. 2:: Eine schematische Darstellung einer alternativen Ausführungsform der vorliegenden Erfindung;
- Fig. 3:: Ein Diagram, das den Temperaturverlauf über der Zeit sowie den Einschaltzustand der Signalgebervorrichtung über der Zeit darstellt.

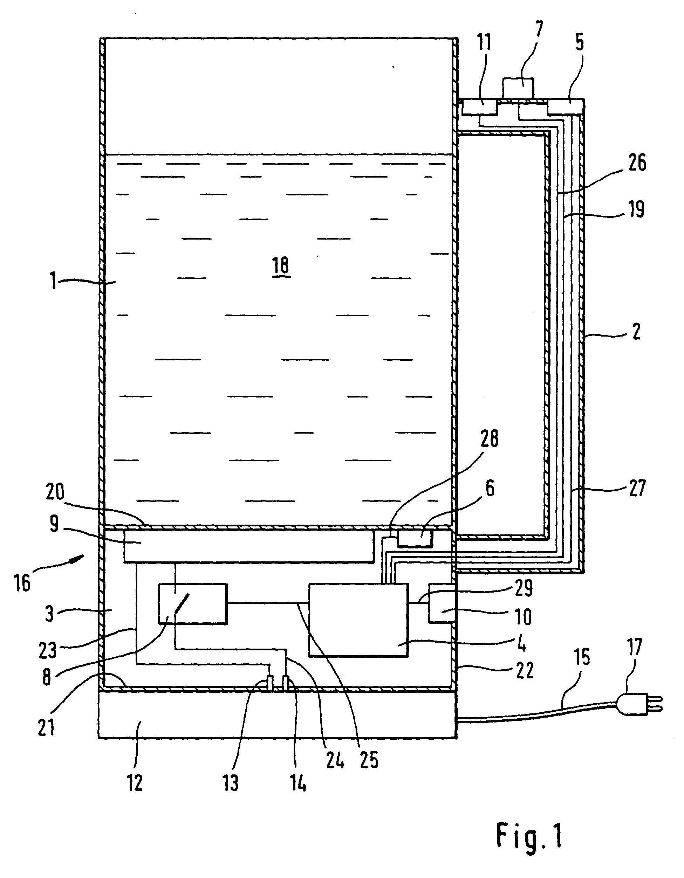

Fig. 1 zeigt eine schematische Darstellung einer vorteilhaften Ausführungsform der vorliegenden Erfindung im Schnitt. Darin weist der Wasserkocher einen zylindrischen Wasserbehälter 1 mit einem an dessen Wand 22 angeordneten U-förmigen Griff 2 und einem die zylindrische untere Fortsetzung des Wasserbehälters 1 bildenden Bodenraum 3 auf, die gemeinsam als Oberteil 16 bezeichnet werden. Das Oberteil 16 sitzt mit seiner Bodenraumunterseite 21 auf einer ebenfalls zylindrischen, mit der Wand 22 des Oberteils 16 abschließenden Basisplatte 12 auf, die der Spannungsversorgung einer Heizeinrichtung 9 und einer Steuereinrichtung 4 dient, die im Bodenraum 3 angeordnet sind.

Die Steuereinrichtung 4 ist über einen ersten Eingang durch die Steuerleitung 27 mit einem EIN-/AUS- Schalter 5 verbunden. Ein zweiter Eingang der Steuereinrichtung 4 ist mit einem ebenfalls im Bodenraum 3 unterhalb des Behälterbodens 20 des Wasserbehälters 1 angeordneten Temperatursensor 6 über eine Leitung 29 und ein dritter Eingang mit einer am U-förmigen Griff 2 angeordneten Eingabeeinrichtung 7 über eine Steuerleitung 19 verbunden. Ein erster Ausgang der Steuereinheit 4 ist über ein Signalkabel 25 mit einem steuerbaren Schalter 8 verbunden, der die Spannungsversorgung für die Heizeinrichtung 9 herstellt oder unterbricht. Ein zweiter Ausgang ist über eine Leitung 29 mit einem akustischen Signalgeber 10 und ein dritter Ausgang über ein Signalkabel 26 mit einer Temperaturanzeige 11 verbunden, die im oberen Bereich des U-förmigen Griffs 2 neben der Eingabeeinrichtung 7 angeordnet ist.

Die Betriebsspannung ist die Netzspannung oder eine aus der Betriebsspannung abgeleitete Spannung. Als Netzanschluß weist das Gerät ein Netzkabel 15 und einen Netzstecker 17 auf. Das Ausführungsbeispiel gemäß Fig. 1 ist ein "kabelloses" Gerät, bei dem das Oberteil 16 von der Basisplatte 12 abgehoben werden kann. Die Basisplatte 12 enthält den Netzanschluß und ist mit dem Oberteil 16 durch steckbare Netzkontakte 13 und 14 verbunden, die über elektrische Leitungen 23, 24 mit der Heizeinrichtung 9 verbunden bzw. verbindbar sind. Die elektrische Leitung 24 ist über den Schalter 8 mit der Heizeinrichtung 9 verbindbar. Die Steuereinheit 4 wird mit der Netzspannung oder eine aus der Netzspannung abgeleiteten Spannung versorgt. Der Wasserkocher ist aus Edelstahl und/oder geeignetem thermoplastischem Kunststoff hergestellt.

Beim Betrieb wird die benötigte Wassermenge in den Wasserbehälter 1 gefüllt. Mit der Eingabeeinrichtung 7 wird die Zieltemperatur ϑ_{Ziel} für die Abkühlphase eingestellt. Durch die Betätigung des EIN-/AUS- Schalters 5 schließt die Steuereinheit 4 den steuerbaren Schalter 8, so daß die Heizeinrichtung 9 mit der Betriebsspannung versorgt wird. Die Heizeinrichtung 9 erhitzt sich und bringt die Wasserfüllung 18 im Verlauf der Heizphase zum Kochen. Die Steuereinheit 4 registriert über den Temperatursensor 6 die Temperatur des Wassers. Bei Erreichen der maximal zulässigen Wassertemperatur ϑₘₐₓ beendet die Steuereinheit 4 die Heizphase durch Abschalten der Heizeinrichtung 9, indem sie die Spannungsversorgung der Heizeinrichtung 9 durch das Öffnen des steuerbaren Schalters 8 unterbricht. Es folgte die Abkühlphase, in der die Wassertemperatur sinkt. Wenn die Wassertemperatur die eingestellte Zieltemperatur ϑ_{Ziel} erreicht hat, schaltet die Steuereinheit 4 den Signalgeber 10 ein. Hierdurch ertönt ein akustisches Signal, was den Benutzer auf das Erreichen der Zieltemperatur ϑ_{Ziel} hinweist, ohne daß er den Temperaturverlauf während der Abkühlphase beobachten muß. Voraussetzung für die Aktivierung des Signalgebers 10 ist es, daß die Heizphase beendet wurde. Indikatoren für eine abgeschlossene Heizphase sind erstens das Erreichen der maximal zulässigen Wassertemperatur ϑₘₐₓ oder zweitens die abfallende Wassertemperatur. Die Signalphase, d.h. der Zeitraum, in dem der Signalgeber 10 aktiv ist, wird entweder nach Ablauf einer festgelegten Dauer oder durch die Unterbrechung der Netzspannung durch Abheben des Oberteils 16 beendet. Die Temperaturanzeige 11 informiert über die aktuelle Wassertemperatur. Dabei kann die Temperaturanzeige 11 bei dem Ausführungsbeispielen nach Fig. 1 in verschiedenen Phasen aktiv sein. So kann die Temperaturanzeige 11 zum einen die Temperatur während der Heiz-, Abkühlungs-, und Signalphase anzeigen. Alternativ kann die Temperaturanzeige 11 lediglich die Temperatur anzeigen, solange die Steuereinheit 4 mit Spannung versorgt wird.

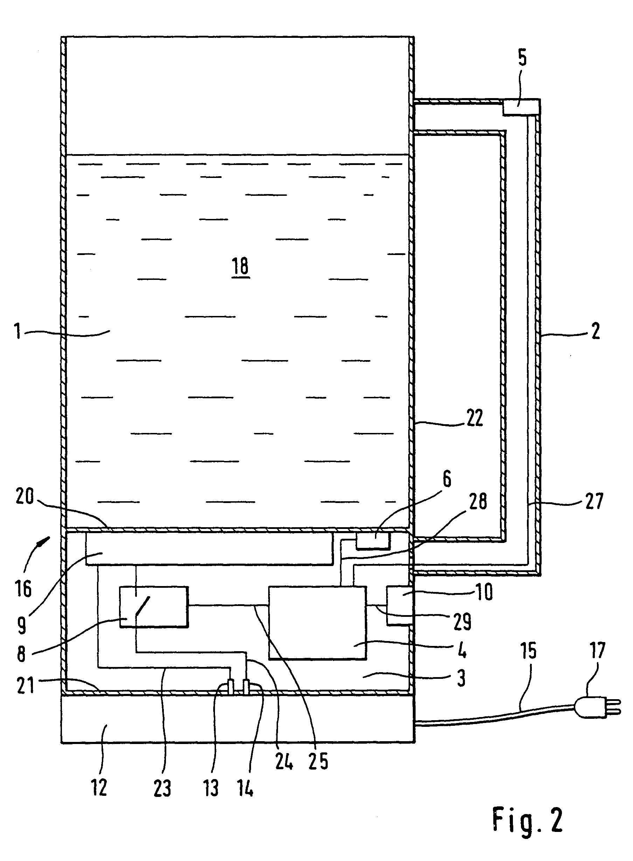

Fig. 2 zeigt eine weitere vorteilhafte Ausführungsform der vorliegenden Erfindung, ähnlich derjenigen aus Fig. 1. Dabei werden gleiche oder ähnliche Teile mit gleichen Bezugszeichen gekennzeichnet. Im Unterschied zu Fig. 1 wird bei der Ausführungsform nach Fig. 2 jedoch die Zieltemperatur der Abkühlphase nicht durch den Benutzer mittels einer Eingabeeinrichtung eingestellt, sondern ist ab Werk auf einen Wert, beispielsweise 75° C, voreingestellt. Eine Anzeige der Temperatur erfolgt bei dieser Ausführungsform nicht, das Vorsehen einer Temperaturanzeige ist aber grundsätzlich möglich. Das Erreichen der Zieltemperatur wird dem Benutzer durch den Signalgeber 10, vorzugsweise durch einen Summton und/oder durch das Aufleuchten einer Leuchtdiode signalisiert. Bei dieser Ausführungsform handelt es sich um eine besonders kostengünstige Variante der vorliegenden Erfindung.

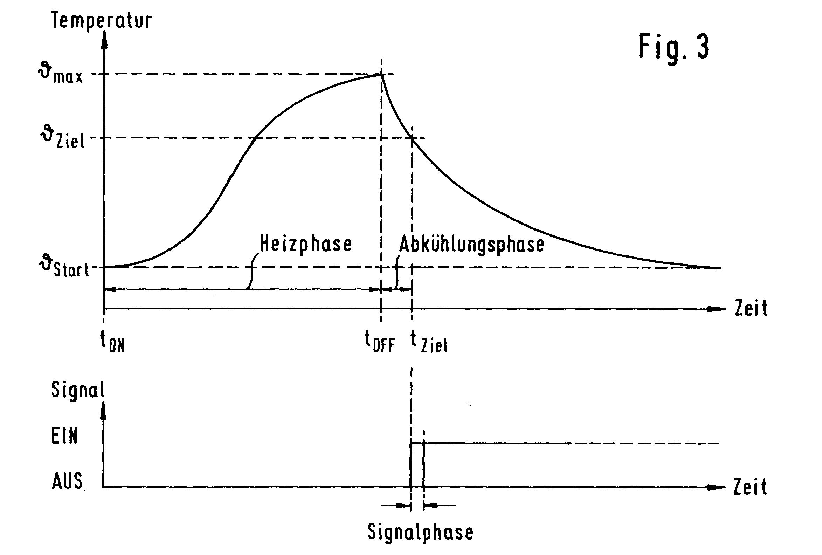

Fig. 3 zeigt ein Diagramm, bei dem im oberen Teil die Temperatur über der Zeit aufgetragen ist. Im unteren Teil ist das Einschaltsignal über der Zeit aufgetragen. Während der Heizphase wird die Flüssigkeit zum Zeitpunkt tₒₙ von einer Temperatur ϑ_{Start}, die beispielsweise Raumtemperatur sein kann, bis auf eine Temperatur ϑₘₐₓ zum Zeitpunkt t_{off} erwärmt. Die Kurve verläuft durch die gestrichelt dargestellte Zieltemperatur ϑ_{Ziel}, ohne daß der Signalgeber 10 aktiviert wird. D.h., die Signalkurve bleibt im AUS-Zustand. Bei Erreichen der Temperatur ϑₘₐₓ, die im vorliegenden Ausführungsbeispiel die Siedetemperatur von Wasser ist, wird die Heizeinrichtung 9 automatisch abgeschaltet. Die Abschaltung erfolgt dabei derart, daß vom Temperatursensor 6 ein entsprechendes Signal an die Steuereinrichtung 4 ausgesandt wird. Die Steuereinrichtung 4 öffnet dann den Schalter 8, wodurch die Betriebsspannungszufuhr für die Heizeinrichtung 9 unterbrochen wird. Nun erfolgte die Abkühlphase. Der Kurvenverlauf entspricht dabei einer abklingenden Hyperbelfunktion, die sich der Starttemperatur ϑ_{Start} annähert. Beim Erreichen der Zieltemperatur ϑ_{Ziel} zum Zeitpunkt t_{Ziel} wird der Signalgeber eingeschaltet. Die Signalkurve entspricht dabei einer Sprungfunktion, wobei sich der Zustand von "AUS" während der Heiz- und anfänglichen Abkühlphase auf "EIN" zum Zeitpunkt t_{Ziel} ändert. Der Signalgeber bleibt über die Zeitspanne einer vorbestimmten Signalphase aktiv oder wird durch Abheben des Oberteils und die damit verbundene Unterbrechungen der Netzspannungsversorgung abgeschaltet.

## Patentansprüche

1. Wasserkocher mit zumindest einem Wasserbehälter (1), einer Heizeinrichtung (9) zum Erhitzen der im Wasserbehälter (1) aufgenommenen Flüssigkeit (18) und einer mit einem Temperatursensor (6) verbundenen Steuereinrichtung (4), die zum automatischen Abschalten der Heizeinrichtung (9) beim Erreichen des Siedepunkts dient,
**dadurch gekennzeichnet**,
daß der Wasserkocher einen von der Steuereinrichtung (4) angesteuerten Temperaturindikator (10) zum Signalisieren des Erreichens zumindest einer vorbestimmten diskreten Abkühltemperatur nach der Abschaltung der Heizeinrichtung aufweist.

2. Wasserkocher nach Anspruch 1,
**dadurch gekennzeichnet**,
daß die Steuereinrichtung (4) derart ausgestaltet ist, um den Temperaturindikator (10) erst nach dem automatischen Abschalten der Heizeinrichung (9) anzusteuern.

3. Wasserkocher nach einem der vorangehenden Ansprüche,
**dadurch gekennzeichnet**,
daß die vom Temperaturindikator (10) signalisierte vorbestimmte Temperatur unterhalb des Siedepunkts vom Benutzer über eine am Wasserkocher angeordnete Eingabeeinrichtung (7) wählbar ist.

4. Wasserkocher nach Anspruch 3,
**dadurch gekennzeichnet**,
daß die Temperatur über die Eingabeeinrichtung (7) stufenlos wählbar ist.

5. Wasserkocher nach einem der vorangehenden Ansprüche,
**dadurch gekennzeichnet**,
daß die Temperatur über die Eingabeeinrichtung (7) aus mehreren vorbestimmten Temperaturen diskret wählbar ist.

6. Wasserkocher nach einem der vorangehenden Ansprüche,
**dadurch gekennzeichnet**,
daß als Temperaturindikator (10) ein akustischer Signalgeber vorgesehen ist.

7. Wasserkocher nach einem der vorangehenden Ansprüche,
**dadurch gekennzeichnet**,
daß als Temperaturindikator (10) ein optischer Signalgeber vorgesehen ist.

8. Wasserkocher nach einem der vorangehenden Ansprüche,
**dadurch gekennzeichnet**,
daß eine Temperaturanzeige (11) an einem aus Wasserbehälter (1), einem Griff (2) und einem Bodenraum (3), gebildeten Oberteil (16) vorgesehen ist.

9. Wasserkocher nach Anspruch 8,
**dadurch gekennzeichnet**,
daß ein Flüssigkristallmeßstreifen mit reversibler Anzeige als Temperaturanzeige (11) am Wasserkocher angeordnet ist.

10. Wasserkocher nach einem der vorangehenden Ansprüche,
**dadurch gekennzeichnet**,
daß die vorbestimmte diskrete Temperatur unterhalb des Siedepunkts 90° C, 70° C, 60° C oder 40° C beträgt.

11. Wasserkocher nach einem der vorangehenden Ansprüche,
**dadurch gekennzeichnet**,
daß eine Basisplatte (12) zur kabellosen Spannungsversorgung des Oberteils (16) vorgesehen ist.
